# EUROPÄISCHE PATENTANMELDUNG

(11) **EP 1 516 660 A2**
(43) Veröffentlichungstag der Anmeldung: **23.03.2005**
(21) Anmeldenummer: 04021778.8
(22) Anmeldetag: 14.09.2004
(51) Int. Cl.: B01D 53/04

(54) **Adsorbereinrichtung**

(30) Priorität: 19.09.2003 AT 14862003
(71) Anmelder: GE Jenbacher GmbH & Co. OHG, 6200 Jenbach (AT)
(72) Erfinder: Klane, Bernd, 6262 Bruck am Ziller Nr.2 (AT); Häusl, Günter, 6200 Jenbach (DE)
(74) Vertreter: Torggler, Paul N.

(57) **Zusammenfassung**

Adsorbereinrichtung mit einem mit Schüttgut (2) füllbaren Adsorberbehälter (1) und einer Schüttgutentnahmevorrichtung, insbesondere zur Entnahme von Schüttgutproben, aus dem Adsorberbehälter, wobei die Schüttgutentnahmevorrichtung mindestens eine verschließbare Entnahmeöffnung (6) zum Entnehmen von Schüttgut (2), vorzugsweise von Schüttgutproben, aus dem Adsorberbehälter (1) aufweist.

## Beschreibung

Die vorliegende Erfindung betrifft eine Adsorbereinrichtung mit einem mit Schüttgut füllbaren Adsorberbehälter und einer Schüttgutentnahmevorrichtung, insbesondere zur Entnahme von Schüttgutproben, aus dem Adsorberbehälter.

Adsorbereinrichtungen werden unter anderem zur Gasreinigung von biogenen Brenngasen eingesetzt. Derartige Brenngase können beispielsweise Spurenstoffe wie Schwefelwasserstoff oder sogenannte Siloxane enthalten, die Probleme bei hohen Verbrennungstemperaturen in nachgeschalteten Blockheizkraftwerken verursachen. Dabei setzen sich die Siloxane zu kristallinem Siliziumdioxid um, welches durch die Bildung kleiner Körnchen zu frühem Motorverschleiß und/oder zu erhöhten Abgasemissionen führen kann. Es ist bereits bekannt, diese Verunreinigungen durch Adsorptionsverfahren durch die sogenannte Festbettadsorption zu entfernen, wobei ein im Adsorberbehälter befindliches Schüttgut die Spurenstoffe adsorbiert. Da das Schüttgut eine begrenzte Adsorptionskapazität aufweist, ist es relevant, mittels Schüttgutproben die Erschöpfung des sogenannten Adsorbens zu ermitteln und dieses bei Bedarf auszutauschen. Der Stand der Technik offenbart beispielsweise Probenahmevorrichtungen, bei denen ein Rohrstück durch eine geeignete seitliche Öffnung in den Adsorberbehälter eingeschoben wird, sodass beim Herausziehen Adsorbenspartikel im Rohrinneren verbleiben. Dabei wird das Schüttgut teilweise zerbrochen, die Bruchstücke haben daher eine höhere Schüttdichte und dadurch werden die Messergebnisse verfälscht.

Aufgabe der vorliegenden Erfindung ist es daher, eine schonende und einfache Variante für die Entnahme von Schüttgut aufzuzeigen, um damit eine exakte Bestimmung der Schüttdichte des Adsorbens zu ermöglichen.

Dies wird erfindungsgemäß dadurch erreicht, dass die Schüttgutentnahmevorrichtung mindestens eine verschließbare Entnahmeöffnung zum Entnehmen von Schüttgut, vorzugsweise von Schüttgutproben, aus dem Adsorberbehälter aufweist.

Durch diese erfindungsgemäße Schüttgutentnahmevorrichtung werden auf schonende Art und Weise Schüttgutpartikel entnommen, die einen exakten Aufschluss über die Schüttdichte geben, da die Schüttdichte und damit das Gewicht ein Kennzeichen des Beladungszustandes des Adsorbens ist. Hat das Gewicht des Adsorbens ein bestimmtes Gewicht erreicht, so muss zur verbesserten Aufnahme von Spurenstoffen ein Adsorbenswechsel durchgeführt werden. Mit der vorliegenden Erfindung wird eine Schüttgutentnahmevorrichtung vorgeschlagen, die eine exakte Bestimmung der Schüttdichte ermöglicht und die sich überdies durch eine unkomplizierte, fehlerfreie und schnelle Entnahme auszeichnet.

Vorteilhaft ist vorgesehen, dass die Entnahmeöffnung mit einer gasdichten Schleuse versehen ist. In der Praxis ist es aufwendig, aus einem kontinuierlich unter Druck stehenden Adsorber eine Adsorbensprobe zu entnehmen. Der Betrieb muss unterbrochen, die Adsorberbehälter müssen entspannt und inertisiert werden und ein Inspektionsdeckel zur Probenentnahme geöffnet werden. Durch die Besonderheit der vorliegenden Erfindung kann zu jedem Zeitpunkt eine Schüttgutprobe entnommen werden, ohne dass der Betrieb der Adsorbereinrichtung gestört wird. Auch höhere Betriebsdrücke im Adsorber stellen für diese Probenahmevorrichtung kein Problem dar. Da für das Gas während der Probenahme keine direkte Verbindung nach außen besteht, sind keine Vorsichtsmaßnahmen hinsichtlich Explosionsgefahr und Geruchsbelästigung notwendig.

Besonders vorteilhaft ist vorgesehen, dass die Entnahmevorrichtung im Inneren des Adsorberbehälters an einem Ort mit repräsentativen Adsorptionsbedingungen, vorzugsweise in der oberen Deckschicht des Schüttgutes, angeordnet ist. Versuche der Anmelderin haben gezeigt, dass sich bei bestimmten Gasreinigungsaufgaben, z.B. bei Entfemen von Siloxanen aus Klärgas, der Wechselzeitpunkt des Adsorbens durch Bestimmung der Schüttdichte in der oberen Deckschicht bestimmt wird. Repräsentative Adsorptionsbedingungen bedeutet hier, dass die Entnahmevorrichtung an eine Stelle platziert wird, an der die Messung einen möglichst objektiven Aufschluss über den Beladungszustand des Adsorbers gibt. Dies ist beispielsweise an einem Ort in der sogenannten Stoffübergangszone der Fall. Eine Probe nahe des Behälterrandes ist beispielsweise nicht geeignet, da in diesem Bereich andere Adsorptionsbedingungen (z.B. Randgängigkeit oder eine kalte Behälterwand) vorliegen können. Die Adsorbensprobe liegt also bis zum Zeitpunkt der Entnahme an einem Ort, an dem repräsentative Adsorptionsbedingungen herrschen.

Vorteilhaft ist vorgesehen, dass die Schüttgutentnahmevorrichtung ein zumindest teilweise in den Adsorberbehälter hineinreichendes, vorzugsweise starres, Rohr mit einer zwischen einer Öffnungsstellung und einer Schließstellung verstellbaren Verschlussblende als Entnahmeöffnung aufweist. Dieses kann beispielsweise als stationäres Rohr ausgeführt sein, welches immer am gleichen repräsentativen Entnahmepunkt im Adsorberbehälter angeordnet ist. Dadurch wird zum einen durch ein einmaliges Positionieren des Rohres ein günstiger Entnahmepunkt für alle nachfolgenden Messungen ermöglicht, zum anderen können die Messergebnisse günstig miteinander verglichen und ein ungefähres Austauschintervall ermittelt werden. Durch die verstellbare Verschlussblende kann gerade soviel Schüttgut entnommen werden, wie für die Messung tatsächlich notwendig ist. Der Druck im Adsorberbehälter wirkt jedoch zu keinem Zeitpunkt auf frei bewegliche Probenahmebauteile. Dadurch besteht keine Gefahr durch Herausschnellen eines ungesicherten Probenahmerohres, welches ein potentielles Verletzungsrisiko darstellen würde. Es muss auch nicht mit Hilfsmitteln wie Ketten oder dgl. ein ungewolltes Austreten des Rohres verhindert werden. Es gibt auch keine frei beweglichen Teile die durch unsachgemäße Handhabung verlegt oder beschädigt werden könnten, die eine sichere und exakte Probenahme erschweren oder gar unmöglich werden lassen.

Günstigerweise ist das Rohr vom Inneren des Adsorberbehälters nach außen hin abfallend, vorzugsweise mit α größer gleich 30° gegen die Horizontale, geneigt. Durch diese Neigung kann ein vorteilhaftes Rieseln des Schüttgutes im Rohrinneren auch bei gröberer Struktur des Schüttgutes ermöglicht werden. Dadurch wird einerseits verhindert, dass das Schüttgut im Rohrinneren zurückbleibt und dadurch nachfolgende Messungen verfälscht werden, andererseits wird dadurch eine rasche Entnahme ermöglicht. Es muss auch kein Adsorbens als Vorlauf entnommen und entsorgt werden, da sich zwischen zwei Probennahmen kein Adsorbens in der Entnahmevorrichtung befindet.

Günstigerweise ist vorgesehen, dass die Verschlussblende an einer Welle angeordnet ist und durch diese drehbar ist. Dadurch kann die Entnahmeöffnung am festgelegten repräsentativen Entnahmepunkt verbleiben, durch die drehbare Welle kann von außen die Verschlussblende exakt verstellt werden, sodass eine exakte Menge an Schüttgut entnommen und zum Verwiegen der Schüttdichte herangezogen werden kann. Diese Welle kann händisch oder selbstverständlich auch motorisch betrieben werden, es wird dadurch auch kein Werkzeug für die Entnahme von Schüttgut benötigt.

Günstigerweise ist vorgesehen, dass das Schüttgut Adsorbens, vorzugsweise Aktivkohle in Pelletform, aufweist, welches zur Aufnahme von, vorzugsweise brennmaschinenschädigenden, Spurenstoffen aus biogenen Brenngasen vorgesehen ist. Darunter versteht man generell eine Gruppe von künstlich hergestellten porösen Kohlenstoffen mit einer schwammartigen Struktur. Diese hat sich speziell zur Filterung von maschinenschädlichen Spurenstoffen als günstig erwiesen und zeichnet sich neben Effektivität auch durch geringen Kostenaufwand aus. Selbstverständlich kann auch ein anderer Adsorbens, beispielsweise mineralische Zeolithe, zum Einsatz kommen.

Weitere Einzelheiten und Vorteile der vorliegenden Erfindung werden anhand der Figurenbeschreibung unter Bezugnahme auf die Zeichnungen im Folgenden näher erläutert. Darin zeigen:
- Fig. 1: eine schematische Darstellung einer Adsorbereinrichtung mit der erfindungsgemäßen Schüttgutentnahmevorrichtung,
- Fig. 2: eine schematische Seitenansicht eines Teiles der Schüttgutentnahmevorrichtung mit geschlossener Verschlussblende,
- Fig. 3: eine schematische Draufsicht auf das in Fig. 2 dargestellte Teil der Schüttgutentnahmevorrichtung mit geöffneter Verschlussblende, und
- Fig. 4a,b,c: eine zeitliche Abfolge während der Entnahme von Schüttgut.

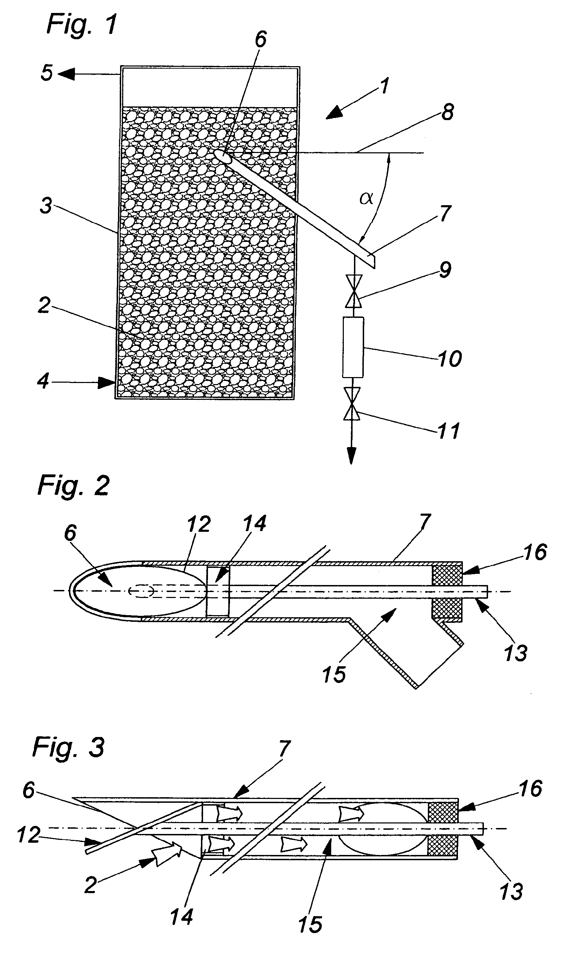

Fig. 1 zeigt eine schematische Darstellung einer Adsorbereinrichtung 1 mit einem mit Schüttgut 2 füllbaren Adsorberbehälter 3, der eine allseitig umschließende Wandung, eine bodennahe Gaseintrittsöffnung 4 für ein zu reinigendes Gas und eine deckflächennahe Gasaustrittsöffnung 5 für das gereinigte Gas aufweist. Im Weiteren ist eine Entnahmeöffnung 6 zum Entnehmen von Schüttgut 2 im Inneren des Adsorberbehälters 3 vorgesehen. Ein Rohr 7 ist vom Inneren des Adsorberbehälters 3 nach außen hin abfallend, vorzugsweise mit α größer gleich 30° gegen die Horizontale 8, geneigt. Das Rohr weist erfindungsgemäß die Entnahmeöffnung 6, vorzugsweise eine Verschlussblende 12 auf, die zwischen einer Öffnungsstellung und einer Schließstellung verstellbar ist. Der Vollständigkeit halber sei noch die erste Absperrvorrichtung 9, das zweite abschließbare Volumen 10 und die zweite Absperrvorrichtung 11 erwähnt, deren Funktion im Zusammenhang mit den anderen Figuren noch näher erläutert wird.

Fig. 2 zeigt eine schematische Seitenansicht eines Rohres 7, welches zumindest teilweise in den Adsorberbehälter 3 hineinreicht. Die Entnahmeöffnung 6 wird in dem gezeigten Ausführungsbeispiel durch die Verschlussblende 12 verschlossen und geöffnet. Die Verschlussblende 12 ist an einer Welle 13 angeordnet und ist durch diese drehbar. In Fig. 2 ist die Verschlussblende 12 geschlossen. Um einen ungewollten Gasaustritt zwischen Welle 13 und Rohr 7 zu vermeiden, sind Dichtpackungen 16 vorgesehen. Diese können beispielsweise aus sogenannten Stopfdichtpackungen ausgebildet sein. Das Schüttgut 2 wird nicht von oben sondern seitlich entnommen, da sonst das Schüttgut 2 durch die darunter liegende Anordnung des Rohres 7 keinen repräsentativen Entnahmepunkt darstellen würde, da dieser Bereich nicht gleichmäßig vom aufströmenden Gas durchsetzt wird. Die Verschlussblende 12 weist einen entsprechenden Lagerring 14 auf, der in dem Rohr 7 geführt wird. Durch die Öffnungsbewegung der Verschlussblende 12 kann Schüttgut 2 in das Rohr 7 einrieseln, welches ein erstes abschließbares Volumen 15 für die vorübergehende Aufnahme von Schüttgut 2 aufweist.

Fig. 3 zeigt eine schematische Draufsicht auf das Rohr 7, wobei die Verschlussblende 12 geöffnet ist. Bei dieser Position der Verschlussblende 12 kann bei entsprechender Neigung des Rohres 7 Schüttgut 2 in das erste abschließbare Volumen 15 einrieseln, in welchem es vorübergehend aufgenommen wird. Durch die Gestaltung der Geometrie und der Öffnungsbewegung der Verschlussblende 12 werden die Adsorbenspartikel des Schüttgutes 2 nicht mechanisch zerstört. Die Probenmenge ist über die Auslegung der beiden abschließbaren Volumina 15, 16 so gestaltbar, dass eine ausreichende Menge an Schüttgut 2 in einem Durchgang entnommen werden kann. Das einzige zu dichtende Bauteil ist die Durchführung der Welle 13 mit selbst nachstellender Dichtpackung 16. Diese kann durch eine sogenannte Stopfdichtpackung realisiert werden, kann wartungsfrei und so gestaltet werden, dass sie den geltenden Sicherheitsrichtlinien entspricht.

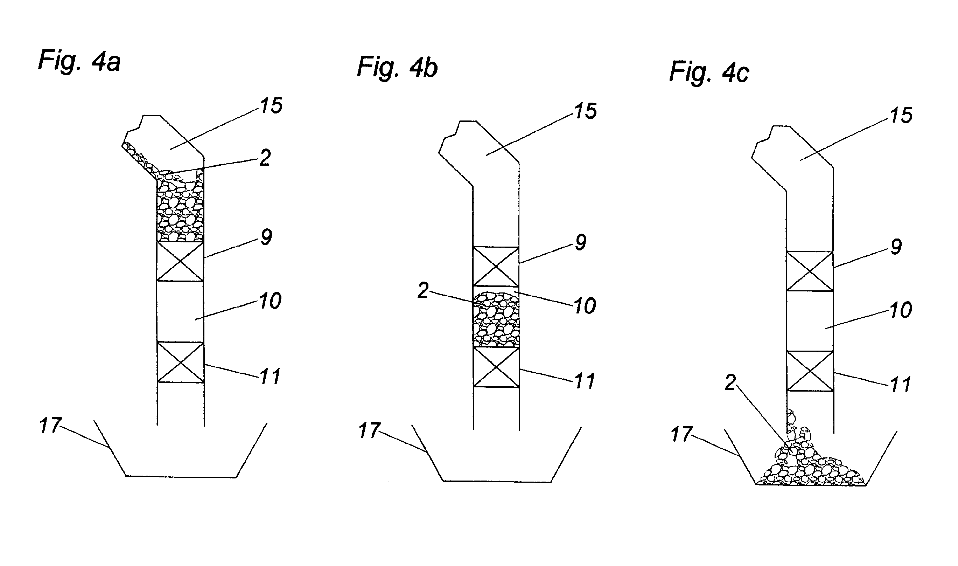

Fig. 4a, 4b, 4c zeigen eine zeitliche Abfolge während der Entnahme von Schüttgut 2. Durch die Offenstellung der Verschlussblende 12 (in Fig. 4a, 4b, 4c nicht dargestellt) kann Schüttgut 2 in ein erstes abschließbares Volumen 15 einrieseln, welches das Schüttgut 2 nur vorübergehend aufnimmt. Das erste abschließbare Volumen 15 ist einerseits durch die Verschlussblende 12 und andererseits durch eine erste Absperrvorrichtung 9, vorzugsweise durch einen Kugelhahn, räumlich abschließbar. Im Weiteren weist die Schüttgutentnahmevorrichtung ein zweites abschließbares Volumen 10 für die vorübergehende Aufnahme von Schüttgut 2 auf, das außerhalb des Adsorberbehälters 3 angeordnet ist. Die beiden räumlich abschließbaren Volumina 15, 10 werden in dem gezeigten Ausführungsbeispiel als Rohrräume realisiert. Das zweite abschließbare Volumen 10 ist durch die erste Absperrichtung 9 einerseits und andererseits durch eine zweite Absperrvorrichtung 11, vorzugsweise durch einen weiteren Kugelhahn, räumlich abschließbar. Die zweite Absperrvorrichtung 11 ist auf der Ausgangsseite des abschließbaren Volumens 10 angeordnet. Vorteilhaft ist vorgesehen, dass das Schüttgut 2 während des Reinigungsbetriebes, vorzugsweise während der Adsorberbehälter 3 von einem zu reinigenden Gas durchströmt wird, aus dem Adsorberbehälter 3 entnommen wird. Es ist daher günstigerweise vorgesehen, dass das Schüttgut 2 über eine gasdichte Schleuse (erstes abschließbares Volumen 15, erste Absperrvorrichtung 9, zweites abschließbares Volumen 10, zweite Absperrvorrichtung 11) aus dem Adsorberbehälter 3 entnommen wird.
Zur Entnahme von Schüttgut 2 geht man günstigerweise so vor, dass zuerst die Verschlussblende 12 geöffnet wird und dabei das Schüttgut 2 bei geschlossener erster Absperrvorrichtung 9 in das erste abschließbare Volumen 15 einrieseln kann, anschließend die Verschlussblende 12 wieder geschlossen und die erste Absperrvorrichtung 9 geöffnet wird, wodurch das Schüttgut 2 bei geschlossener zweiter Absperrvorrichtung 11 in das zweite abschließbare Volumen 10 rieseln kann, anschließend die erste Absperrvorrichtung 9 wieder geschlossen und die zweite Absperrvorrichtung 11 geöffnet wird, wobei das Schüttgut 2 aus dem zweiten abschließbaren Volumen 10 entnommen und zuletzt die zweite Absperrvorrichtung 11 wieder geschlossen wird. Das Schüttgut 2 kann in einen Behälter 17 gefüllt werden und einer entsprechenden Analyse zugeführt werden, die über den Beladungszustand des Schüttgutes 2 Aufschluss gibt.

Es versteht sich von selbst, dass die erfindungsgemäße Schüttgutentnahmevorrichtung nicht auf die in den Figuren dargestellten Ausführungsbeispiele beschränkt ist, noch durch diese eingeschränkt werden soll. Beispielsweise ist statt dem Rohr im Inneren des Adsorberbehälters auch eine Rinne denkbar. Auch die Gestaltung der Entnahmeöffnung kann selbstverständlich auch auf andere Art und Weise erfolgen, beispielsweise durch zwei ineinandergeschobene Rohre, die durch gegenseitiges Verdrehen eine Öffnung freigeben und wieder verschließen können. Die vorliegende Erfindung eignet sich außerdem günstig für eine Automatisation, die durch eine entsprechende Ausrüstung einfach realisiert werden kann.

## Patentansprüche

1. Adsorbereinrichtung mit einem mit Schüttgut füllbaren Adsorberbehälter und einer Schüttgutentnahmevorrichtung, insbesondere zur Entnahme von Schüttgutproben, aus dem Adsorberbehälter, **dadurch gekennzeichnet, dass** die Schüttgutentnahmevorrichtung mindestens eine verschließbare Entnahmeöffnung (6) zum Entnehmen von Schüttgut (2), vorzugsweise von Schüttgutproben, aus dem Adsorberbehälter (1) aufweist.

2. Adsorbereinrichtung nach Anspruch 1, **dadurch gekennzeichnet, dass** die Entnahmeöffnung (6) mit einer gasdichten Schleuse versehen ist.

3. Adsorbereinrichtung nach Anspruch 1 oder 2, **dadurch gekennzeichnet, dass** die Entnahmevorrichtung (6) im Inneren des Adsorberbehälters (1) an einem Ort mit repräsentativen Adsorptionsbedingungen, vorzugsweise in der oberen Deckschicht des Schüttgutes (2), angeordnet ist.

4. Adsorbereinrichtung nach einem der Ansprüche 1 bis 3, **dadurch gekennzeichnet, dass** die Schüttgutentnahmevorrichtung ein zumindest teilweise in den Adsorberbehälter (1) hineinreichendes, vorzugsweise starres, Rohr (7) mit einer zwischen einer Öffnungsstellung und einer Schließstellung verstellbaren Verschlussblende (12) als Entnahmeöffnung (6) aufweist.

5. Adsorbereinrichtung nach Anspruch 4, **dadurch gekennzeichnet, dass** das Rohr (7) vom Inneren des Adsorberbehälters nach außen hin abfallend, vorzugsweise mit α größer gleich 30° gegen die Horizontale (8), geneigt ist.

6. Adsorbereinrichtung nach Anspruch 4 oder 5, **dadurch gekennzeichnet, dass** die Verschlussblende (12) an einer Welle (13) angeordnet ist und durch diese drehbar ist.

7. Adsorbereinrichtung nach einem der Ansprüche 1 bis 6, **dadurch gekennzeichnet, dass** die Schüttgutentnahmevorrichtung ein erstes abschließbares Volumen (15) für die vorübergehende Aufnahme von Schüttgut (2) aufweist.

8. Adsorbereinrichtung nach Anspruch 7, **dadurch gekennzeichnet, dass** das erste abschließbare Volumen (15) durch die Verschlussblende (12) einerseits und andererseits durch eine erste Absperrvorrichtung (9), vorzugsweise durch einen Kugelhahn, räumlich abschließbar ist.

9. Adsorbereinrichtung nach einem der Ansprüche 1 bis 8, **dadurch gekennzeichnet, dass** die Schüttgutentnahmevorrichtung ein zweites abschließbares Volumen (10) für die vorübergehende Aufnahme von Schüttgut (2) aufweist, das außerhalb des Adsorberbehälters (1) angeordnet ist.

10. Adsorbereinrichtung nach Anspruch 9, **dadurch gekennzeichnet, dass** das zweite abschließbare Volumen (10) durch die erste Absperrvorichtung (9) einerseits und andererseits durch eine zweite Absperrvorrichtung (11), vorzugsweise durch einen weiteren Kugelhahn, räumlich abschließbar ist.

11. Adsorbereinrichtung nach Anspruch 9 oder 10, **dadurch gekennzeichnet, dass** die zweite Absperrvorrichtung (11) auf der Ausgangsseite des zweiten abschließbaren Volumens (10) angeordnet ist.

12. Adsorbereinrichtung nach einem der Ansprüche 1 bis 11, **dadurch gekennzeichnet, dass** das Schüttgut (2) Adsorbens, vorzugsweise Aktivkohle in Pelletform, aufweist, welches zur Aufnahme von, vorzugsweise brennmaschinenschädigenden, Spurenstoffen aus biogenen Brenngasen vorgesehen ist.

13. Adsorbereinrichtung nach einem der Ansprüche 1 bis 12, **dadurch gekennzeichnet, dass** der Adsorberbehälter (1) eine allseitig umschließende Wandung aufweist, die mit mindestens einer Gaseintrittsöffnung (4) für ein zu reinigendes Gas, mindestens einer Gasaustrittsöffnung (5) für das gereinigte Gas und mindestens einer Entnahmeöffnung (6) zum Entnehmen von Schüttgut (2) versehen ist.

14. Verfahren zur Entnahme von Schüttgut, insbesondere Schüttgutproben, aus einem Adsorberbehälter, insbesondere mit einer Schüttgutentnahmevorrichtung nach einem der Ansprüche 1 bis 13, **dadurch gekennzeichnet, dass** das Schüttgut (2) während des Reinigungsbetriebes, vorzugsweise während der Adsorberbehälter (1) von einem zu reinigenden Gas durchströmt wird, aus dem Adsorberbehälter (1) entnommen wird.

15. Verfahren zur Entnahme von Schüttgut nach Anspruch 14, **dadurch gekennzeichnet, dass** das Schüttgut (2) über eine gasdichte Schleuse aus dem Adsorberbehälter (1) entnommen wird.

16. Verfahren zur Entnahme von Schüttgut nach Anspruch 14 oder 15, **dadurch gekennzeichnet, dass** zuerst die Verschlussblende (12) geöffnet wird und dabei das Schüttgut (2) bei geschlossener erster Absperrvorrichtung (9) in das erste abschließbare Volumen (15) einrieseln kann, anschließend die Verschlussblende (12) wieder geschlossen und die erste Absperrvorrichtung (9) geöffnet wird, wodurch das Schüttgut (2) bei geschlossener zweiter Absperrvorrichtung (11) in das zweite abschließbare Volumen (10) rieseln kann, anschließend die erste Absperrvorrichtung (9) wieder geschlossen und die zweite Absperrvorrichtung (11) geöffnet wird, wobei das Schüttgut (2) aus dem zweiten abschließbaren Volumen (10) entnommen und zuletzt die zweite Absperrvorrichtung (11) wieder geschlossen wird.
